(19) Europäisches Patentamt / European Patent Office / Office européen des brevets

(11) **EP 1 906 198 A2**

(12) **EUROPÄISCHE PATENTANMELDUNG**

(43) Veröffentlichungstag:
**02.04.2008 Patentblatt 2008/14**

(51) Int Cl.:
***G01S 1/00*** *(2006.01)*

(21) Anmeldenummer: 07017159.0

(22) Anmeldetag: **01.09.2007**

(84) Benannte Vertragsstaaten:
**AT BE BG CH CY CZ DE DK EE ES FI FR GB GR HU IE IS IT LI LT LU LV MC MT NL PL PT RO SE SI SK TR**
Benannte Erstreckungsstaaten:
**AL BA HR MK YU**

(30) Priorität: **27.09.2006 DE 102006046001**

(71) Anmelder: **Astrium GmbH**
**81663 München (DE)**

(72) Erfinder: **Trautenberg, Hans L. Dr.**
**85521 Ottobrunn (DE)**

(74) Vertreter: **Hummel, Adam et al**
**EADS Deutschland GmbH**
**Patentabteilung**
**81663 München (DE)**

(54) **Verfahren zum Einstellen der Integritätsalarmschranke in einem Satellitennavigationsgerät**

(57) Die Erfindung betrifft ein Verfahren zum Einstellen der Integritätsalarmschranke in einem Satellitennavigationssystem mit den folgenden Schritten:
- Senden einer Alarmnachricht für einen Satelliten, wenn ein geschätzter Signalfehler des vom Satelliten abgestrahlten Satellitensignals größer als eine vorgegebene Integritätsalarmschranke ist,
- Verändern eines oder mehrerer Parameter in einem vom Satelliten ausgesandten Datenstrom, und
- Einstellen der Integritätsalarmschranke auf Basis der geänderten Parameter.

EP 1 906 198 A2

**Beschreibung**

Die Erfindung betrifft ein Verfahren zum Einstellen der Integritätsalarmschranke in einem Satellitennavigationssystem gemäß Anspruch 1 bzw. 7.

Im zukünftigen europäischen Satellitennavigationssystem Galileo wird ein Integritätsdatenstrom bereit stehen, der es ermöglicht, System- oder Satellitenausfälle an Nutzer zu signalisieren. Insbesondere können fehlerhafte Satellitensignale mit Integritätswarnungen versehen werden. Bei Galileo wird auch zwischen verschiedenen Nutzer-Leveln unterschieden werden: Nutzer des Level A sind dynamische Anwendungen mit hoher horizontaler und vertikaler Positionsgenauigkeit, wie beispielsweise Landeanflüge von Flugzeugen oder die Lokalisierung von Zügen auf Nebenstrekken. Nutzer des Level B haben dagegen geringere Anforderungen an die Positionsgenauigkeit wie beispielsweise Aviation en-route. Schließlich sind die Positionsgenauigkeitsanforderungen bei Nutzern des Level C am geringsten. Derartige Nutzer sind beispielsweise maritime Anwendungen.

Das Galileo Integritätskonzept sieht vor, dass die "Processing Facility" des Bodensegments von Galileo eine Vorhersage über die Genauigkeit von Navigationssignalen macht. Diese Vorhersage wird als erwarteter Signalfehler oder Signal In Space Accuracy (SISA) bezeichnet. Die tatsächlichen Fehler der einzelnen, von Satelliten ausgesandten Navigationssignale oder Signal In Space Errors (SISE) werden durch Beobachtungen des Monitoring-Netzwerkes des Galileo-Systems geschätzt. Die geschätzten Fehler werden als estimated SISE (eSISE) bezeichnet. Im Rahmen des Integritätskonzepts ist nun vorgesehen, dass ein Satellit über einen Alarm (IF: Integrity Flag) auf nicht benutzbar gesetzt wird, sobald der geschätzte Signalfehler (eSISE) dieses Satelliten größer als eine Integritätsalarmschranke (TH: Threshold) ist.

Da die Integritätsalarmschranken für die oben erwähnten Benutzer-Level unterschiedlich sind, insbesondere die Schranke für Nutzer des Level A am niedrigsten ist, führt dies dazu, dass Satelliten, die für einen Level A Benutzer nicht benutzbar sind, auch für einen Level B und C Benutzer nicht benutzbar sind, obwohl sie, wenn man getrennte Alarme für die Level B und C Benutzer hätte, noch verwendbar wären. Die Datenraten für Alarme lassen allerdings getrennte Alarme für die unterschiedlichen Benutzer-Level nicht zu.

Die Integritätsalarmschranke wird in Galileo als ein Produkt eines Vorfaktors und der Wurzel der Summe der Quadrate des erwarteten Signalfehlers (SISA) und der Genauigkeit der Signalbeobachtung oder Signal in Space Monitoring Accuracy (SISMA) wie folgt berechnet:

$$TH = k_{pfa} \cdot \sqrt{SISA^2 + SISMA^2}$$

Der Vorfaktor $k_{pfa}$ wird hierbei durch die erlaubte Falschalarmrate bestimmt.

Es ist nun eine Aufgabe der vorliegenden Erfindung, ein Verfahren zum Einstellen der Integritätsalarmschranke in einem Satellitennavigationssystem vorzuschlagen, mit dem unterschiedliche Integritätsanforderungen, insbesondere für verschiedene Benutzer-Level, mit einem Datenstrom befriedigt werden können.

Diese Aufgabe wird durch ein Verfahren zum Einstellen der Integritätsalarmschranke in einem Satellitennavigationssystem mit den Merkmalen von Anspruch 1 bzw. 7 gelöst. Weitere Ausgestaltungen der Erfindung ergeben sich aus den abhängigen Ansprüchen.

Ein wesentlicher Gedanke der Erfindung besteht nun darin, in einem von einem Satelliten eines Navigationssystems ausgesandten Datenstrom einen oder mehrere Parameter zu verändern, welche eine Einstellung der Integritätsalarmschranke bewirken.

Ein weiterer wesentlicher Gedanke besteht darin, einen von einem Satelliten eines Navigationssystems ausgesandten Datenstrom insbesondere in einem Empfänger anders zu interpretieren, und zwar derart, dass das Satellitennavigationssystem unter anderen Voraussetzungen als bisher als verfügbar eingestuft wird.

Die Erfindung betrifft nun gemäß einer Ausführungsform ein Verfahren zum Einstellen der Integritätsalarmschranke in einem Satellitennavigationssystem mit den folgenden Schritten:

- Senden einer Alarmnachricht für einen Satelliten, wenn ein geschätzter Signalfehler des vom Satelliten abgestrahlten Satellitensignals größer als eine vorgegebene Integritätsalarmschranke ist,
- Verändern eines oder mehrerer Parameter in einem vom Satelliten ausgesandten Datenstrom, und
- Einstellen der Integritätsalarmschranke auf Basis der geänderten Parameter.

Die Alarmnachricht kann insbesondere eine Nachricht zum Erhöhen des Wertes für die Genauigkeit der Satellitenbeobachtung umfassen. Die Nachricht zum Erhöhen des Wertes für die Genauigkeit der Satellitenbeobachtung kann insbesondere bewirken, dass der Wert gemäß der folgenden Formel berechnet wird:

$$SISMA = \sqrt{\frac{eSISE^2}{k_{pfa}^2} - SISA^2}$$

wobei SISMA den Wert für die Genauigkeit der Satellitenbeobachtung, SISA einen erwarteten Signalfehler, eSISE den geschätzten Signalfehler und $k_{pfa}$ einen Vorfaktor bezeichnen.

Die Alarmnachricht kann aber auch eine Nachricht zum Einstellen der Integritätswarnschwelle auf einen Wert, der größer oder gleich dem aktuellen Wert für den geschätzten Signalfehler ist, umfassen.

Insbesondere wird die Alarmnachricht von einem Bodensegment des Satellitennavigationssystems gesendet.

Das Einstellen der Integritätsalarmschranke kann auf Basis der geänderten Parameter in einem Empfänger des ausgesandten Datenstrom erfolgen.

Gemäß einer weiteren Ausführungsform der Erfindung ist ein Verfahren zum Einstellen der Integritätsalarmschranke in einem Satellitennavigationssystem mit den folgenden Schritten vorgesehen:

- Empfangen von mit den Satellitensignalen übermittelten Datenströmen der Satelliten, die Alarmnachrichten der jeweiligen Satelliten enthalten können,
- Ermitteln der Anzahl der Alarmnachrichten, und
- Einstellen der Integritätsalarmschranke auf Basis der ermittelten Anzahl der Alarmnachrichten. Vor allem kann das Einstellen der Integritätsalarmschranke abhängig von einem Benutzer-Level erfolgen. Insbesondere kann die Integritätsalarmschranke für einen zweiten Benutzer-Level verringert werden, wenn eine bestimmte Anzahl an Alarmnachrichten für einen ersten Benutzer-Level ermittelt wurde. Weiterhin ist gemäß einer Ausführungsform der Erfindung ein Empfänger für Satellitennavigationssignale vorgesehen, der ausgebildet ist, dieses Verfahren auszuführen.

Schließlich ist gemäß einer Ausführungsform der Erfindung noch ein Computerprogramm zur Durchführung eines der erfindungsgemäßen Verfahren vorgesehen, wenn das Computerprogramm auf einem Computer durchgeführt wird. Das Computerprogramm kann auf einem Datenträger, beispielsweise einem optischen wie einer CD-ROM oder DVD, einem magnetischen wie einer Diskette oder einem elektronischen wie einer Speicherkarte gespeichert sein.

Weitere Vorteile und Anwendungsmöglichkeiten der vorliegenden Erfindung ergeben sich aus der nachfolgenden Beschreibung von Ausführungsbeispielen.

In Galileo wird normalerweise für einen Satelliten, dessen geschätzter Signalfehler eSISE eine vorgegebene Integritätsalarmschranke TH überschreitet, vom Bodensegment des Satellitennavigationssystems ein Alarm "don't use" für diesen Satelliten gesendet. Dies bewirkt bei Empfängern von Satellitennavigationssignalen, dass das Signal dieses Satelliten nicht für einen Navigation verwendet wird. Während für die Benutzer des Levels A mit hohen Integritätsanforderungen dieser Alarm sinnvoll sein kann, könnten die Benutzer der Level B und C mit geringeren Integritätsanforderungen das Signal des Satelliten möglicherweise noch sinnvoll verarbeiten.

Um diesen unterschiedlichen Integritätsanforderungen der Benutzer verschiedener Level gerecht zu werden, kann nun gemäß der Erfindung für einen Satelliten, dessen geschätzter Signalfehler eSISE größer als die Integritätsalarmschranke TH für diesen Satelliten ist, anstelle eines Alarms "don't use" ein spezieller Alarm (Double SISMA Alert) gesendet werden, der das anwendbare SISMA für diesen Satelliten auf eine SISMA setzt, das sich nach der Formel

$$SISMA = \sqrt{\frac{eSISE^2}{k_{pfa}^2} - SISA^2}$$

berechnet.

Für einen Level A Nutzer hat diese Einstellung der Integritätsalarmschranke die gleiche Auswirkung wie ein "don't use" Alarm, da durch das neue SISMA und die daraus berechnete neue Integritätsalarmschranke das Integritätsrisiko am Alert Limit über das tolerierbare Integritätsrisiko am Alert Limit ansteigt.

Alternativ kann anstelle eines Alarms zur Erhöhung des SISMAs auch ein Alarm gesendet werden, in dem der TH für den Satelliten auf einen Wert gesetzt wird, der größer oder gleich dem Wert für den augenblicklichen eSISE ist.

Für einen Level B und C Benutzer ist es sehr wahrscheinlich, dass dieser Alarm das Integritätsrisiko an seinem Alert Limit nicht über das tolerierbare Integritätsrisiko an seinem Alert Limit ansteigen lässt, er also keinen Alarm bekommt. Er hat also deutlich weniger Kontinuitätsvorfälle als der Level A Benutzer, weil erst ein deutlich größerer SISMA und damit TH bei seinem größeren Alert Limit ein Kontinuitätsevent hervorruft.

Es ist wichtig zwischen den Alarmen für Satelliten und den Alarmen für den Nutzer zu unterscheiden. Ein Alarm für einen Satelliten verändert einen oder mehrere Parameter, mit welchen dieser Satellit beschrieben wird. Aus all diesen Parametern für alle in der Positionslösung verwendeten Satelliten bestimmt dann ein Empfänger ob ein Alarm an den Benutzer gegeben werden muss.

Hierdurch können also die unterschiedlichen Kontinuitäts- und Integritätsanforderungen der Level A, B und C Benutzer durch einen einzigen Datenstrom befriedigt werden, der ursprünglich nur für die Befriedigung der Bedürfnisse der Level A Benutzer gedacht war. Dies wird ohne Datenratenerhöhung erreicht, weil der Satellit nicht mehr als für nicht in Ordnung befunden alarmiert wird, sobald der geschätzte Signalfehler größer als die augenblickliche Integritätsalarmschranke ist, sondern über eine sofort wirksame Alarmmeldung zur Erhöhung des SISMAs die Integritätsalarmschranke auf den geschätzten Fehler angehoben wird. Dadurch wird ein Alarm für einen Level A Benutzer nicht zwangsweise ein Alarm für einen Level B und C Benutzer, und es können für den Level B und C Benutzer deutlich höhere Kontinuitäten erreicht werden.

Eine weitere Lösung der Problems besteht darin, dass nun keine Änderungen im Bodensegment vorgenommen werden und der Datenstrom geändert wird, sondern das System unteren anderen Voraussetzungen vom im Nutzerempfänger implementierten Navigationswarnungsalgorithmus als verfügbar erklärt wird.

Bisher wird das Satellitennavigationssystem vom Navigationswarnungsalgorithmus als verfügbar erklärt, wenn in der Positionslösung mit Integrität nur maximal n (n=6) kritische Satelliten enthalten sind. Ein Satellit ist kritisch, wenn dessen Ausfall dazu führt, dass das System vom Navigationswarnungsalgorithmus aufgrund des Anwachsens des Integritätsrisikos über die Integritätsrisikoalarmschwelle als nicht mehr verfügbar erklärt wird. Nach der Erfindung wir nun das System vom Navigationsalgorithmus nur dann als verfügbar erklärt, wenn erst der Ausfall von mindestens m Satelliten dazu führt, dass das System vom Navigationswarnungsalgorithmus aufgrund des Anwachsens des Integritätsrisikos über die Integritätsrisikoalarmschwelle als nicht mehr verfügbar erklärt wird.

Ist die Wahrscheinlichkeit für den Ausfall eines Satelliten in 15 Sekunden $p_{15}$ =10⁻⁶ und sind m=6 kritische Satelliten erlaubt, so beträgt das Kontinuitätsrisiko $m \cdot p_{15}$=6·10⁻⁶ in 15 Sekunden. Führt dagegen erst der Ausfall des zweiten Satelliten dazu, dass das System nicht verfügbar ist, und werden nach dem Ausfall des ersten Satelliten m=6 kritische Satelliten erlaubt und N=10 Satelliten verwendet, so beträgt das Kontinuitätsrisiko $N \cdot p_{15} \cdot 6 \cdot p_{15}$=6·10⁻¹¹ in 15 Sekunden. Nun ist es möglich auch für deutlich längere Zeitintervalle (strengere Kontinuitätsanforderungen) Kontinuität bereitzustellen. Für eine Stunde beträgt das Kontinuitätsrisiko

$$1-\left(1-N \cdot p_{15} \cdot 6 \cdot p_{15}\right)^{\frac{3600}{15}} = 1-\left(1-6\cdot 10^{-11}\right)^{240} = 1,44 \cdot 10^{-8}.$$ Ohne der Erfindung wäre das Kontinuitätsrisiko bei 1,44·10⁻³.

Auch durch diese Lösung können die unterschiedlichen Kontinuitäts- und Integritätsanforderungen der Level A, B Benutzer durch einen einzigen Datenstrom befriedigt werden, der ursprünglich nur für die Befriedigung der Bedürfnisse der Level A Benutzer gedacht war. Dies wird ohne Datenratenerhöhung erreicht, indem der Datenstrom anders interpretiert wird. Dadurch wird ein Alarm für einen Level A Benutzer nicht zwangsweise ein Alarm für einen Level B Benutzer, weil der Level B Benutzer erst beim m-ten Alarm für einen Level A Benutzer über seinen Navigationswarnungsalgorithmus einen Alarm erhält. So können für den Level B Benutzer deutlich höhere Kontinuitäten erreicht werden.

## Patentansprüche

1. Verfahren zum Einstellen der Integritätsalarmschranke in einem Satellitennavigationssystem mit den folgenden Schritten:

   - Senden einer Alarmnachricht für einen Satelliten, wenn ein geschätzter Signalfehler des vom Satelliten abgestrahlten Satellitensignals größer als eine vorgegebene Integritätsalarmschranke ist,
   - Verändern eines oder mehrerer Parameter in einem vom Satelliten ausgesandten Datenstrom, und
   - Einstellen der Integritätsalarmschranke auf Basis der geänderten Parameter.

2. Verfahren nach Anspruch 1,
   **dadurch gekennzeichnet, dass**
   die Alarmnachricht eine Nachricht zum Erhöhen des Wertes für die Genauigkeit der Satellitenbeobachtung umfasst.

**3.** Verfahren nach Anspruch 2,
**dadurch gekennzeichnet, dass**
die Nachricht zum Erhöhen des Wertes für die Genauigkeit der Satellitenbeobachtung bewirkt, dass der Wert gemäß der folgenden Formel berechnet wird:

$$SISMA = \sqrt{\frac{eSISE^2}{k_{pfa}^2} - SISA^2}$$

wobei SISMA den Wert für die Genauigkeit der Satellitenbeobachtung, SISA einen erwarteten Signalfehler, eSISE den geschätzten Signalfehler und $k_{pfa}$ einen Vorfaktor bezeichnen.

**4.** Verfahren nach Anspruch 1,
**dadurch gekennzeichnet, dass**
die Alarmnachricht eine Nachricht zum Einstellen der Integritätswarnschwelle auf einen Wert, der größer oder gleich dem aktuellen Wert für den geschätzten Signalfehler ist, umfasst.

**5.** Verfahren nach einem der Ansprüche 1 bis 4,
**dadurch gekennzeichnet, dass**
die Alarmnachricht von einem Bodensegment des Satellitennavigationssystems gesendet wird.

**6.** Verfahren nach einem der Ansprüche 1 bis 5,
**dadurch gekennzeichnet, dass**
das Einstellen der Integritätsalarmschranke auf Basis der geänderten Parameter in einem Empfänger des ausgesandten Datenstrom erfolgt.

**7.** Verfahren zum Einstellen der Integritätsalarmschranke in einem Satellitennavigationssystem mit den folgenden Schritten:

- Empfangen von mit den Satellitensignalen übermittelten Datenströmen der Satelliten, die Alarmnachrichten der jeweiligen Satelliten enthalten können,
- Ermitteln der Anzahl der Alarmnachrichten, und
- Einstellen der Integritätsalarmschranke auf Basis der ermittelten Anzahl der Alarmnachrichten.

**8.** Verfahren nach Anspruch 7,
**dadurch gekennzeichnet, dass**
das Einstellen der Integritätsalarmschranke abhängig von einem Benutzer-Level erfolgt.

**9.** Verfahren nach Anspruch 8,
**dadurch gekennzeichnet, dass**
die Integritätsalarmschranke für einen zweiten Benutzer-Level verringert wird, wenn eine bestimmte Anzahl an Alarmnachrichten für einen ersten Benutzer-Level ermittelt wurde.

**10.** Empfänger für Satellitennavigationssignale, der ausgebildet ist, ein Verfahren nach einem der Ansprüche 7 bis 9 auszuführen.

**11.** Computerprogramm zur Durchführung eines Verfahrens nach einem der Ansprüche 1 bis 9, wenn das Computerprogramm auf einem Computer durchgeführt wird.

**12.** Datenträger, auf dem das Computerprogramm nach Anspruch 11 gespeichert ist.